# EUROPÄISCHE PATENTSCHRIFT

(11) **EP 2 130 087 B1**
(45) Veröffentlichungstag und Bekanntmachung des Hinweises auf die Patenterteilung: **08.10.2014**
(21) Anmeldenummer: 08758591.5
(22) Anmeldetag: 16.05.2008
(51) Int. Cl.: G02B 21/36

(54) **VERFAHREN UND VORRICHTUNG ZUM MIKROSKOPISCHEN UNTERSUCHEN EINER PROBE, COMPUTERPROGRAMM UND COMPUTERPROGRAMMPRODUKT**
METHOD AND DEVICE FOR MICROSCOPICALLY EXAMINING A SAMPLE, COMPUTER PROGRAM, AND COMPUTER PROGRAM PRODUCT
PROCÉDÉ ET DISPOSITIF D'ANALYSE MICROSCOPIQUE D'UN ÉCHANTILLON, PROGRAMME INFORMATIQUE ET UN PRODUIT PROGRAMME INFORMATIQUE

(30) Priorität: 19.07.2007 DE 102007033793
(43) Veröffentlichungstag der Anmeldung: 09.12.2009
(73) Patentinhaber: Carl Zeiss Microscopy GmbH, 07745 Jena (DE)
(72) Erfinder: VIERECK, Friedrich, W., 80796 München (DE); KRUG, Christof, 81929 München (DE)
(74) Vertreter: Schiffer, Axel Martin
(86) Internationale Anmeldenummer: PCT/EP2008/003966
(87) Internationale Veröffentlichungsnummer: WO 2009/010115

(56) Entgegenhaltungen:
- WO-A-98/39728
- WO-A-03/012518
- WO-A2-03/105675
- US-A1- 2003 016 301
- US-A1- 2005 190 437
- US-A1- 2007 053 057

## Beschreibung

Die vorliegende Erfindung betrifft in einem ersten Aspekt ein Verfahren zum mikroskopischen Untersuchen einer Probe nach dem Oberbegriff des Anspruchs 1.

WO 2006/028439 A1 beschreibt ein Datenmanagementsystem und ein dazugehöriges Verfahren zum Bearbeiten, Speichern und Darstellen von extrem großen Bilddatenmengen, welche durch einen matrixbasierten Mikroskopdiascanner bereitgestellt werden. Die Daten werden als eine Reihe überlappender Bildstreifen erhalten und zu einem nahtlosen, zusammenhängenden Bild vereint

WO 2004/077338 A2 offenbart ein System aus dem Verfahren zum Darstellen von "virtual slides". Die Bilddaten der "Virtual slides" werden auf einen "Virtual slide"-Bildserver gespeichert. Wenn ein Bilddarstellungsprogramm Bilddateien einer speziellen Auflösung anfragt, sendet der Bildserver Bilddaten mit einer Auflösung nahe der angefragten Auflösung an das Bilddarstellungsprogramm, welches die Bilddaten dann auf die gewünschte Auflösung skaliert.

WO 03/105675 A2 behandelt eine automatische Bilderfassung von interessierenden Strukturen innerhalb einer Gewebeprobe. Hierbei wird die Probe mittels eines Computers bei zwei unterschiedlichen Auflösungen mit unterschiedlichen Linsen aufgenommen.

WO 98/39728 behandelt ein Verfahren und eine Vorrichtung zur Erzeugung eines virtuellen mikroskopischen Objektträgers. Dieser virtuelle mikroskopische Objektträger wird mit Hilfe eines computergesteuerten Mikroskops erzeugt, welches eine Vielzahl von Bildern einer Probe mit niedriger Auflösung aufnimmt und diese zu einem großen Bild zusammensetzt. Darüber hinaus werden mit einer anderen Linse auch Bilder mit hoher Auflösung aufgenommen, welche ebenfalls zu einem Gesamtbild zusammengesetzt werden.

WO 01/84209 A2 beschreibt einen vollautomatischen schnellen Objektträgerscanner, welcher nur ein einziges Objektiv verwendet. Das Bild wird hier in der höchsten Auflösung aufgenommen und sodann digital in andere Formate unterschiedlicher Auflösung weiterverarbeitet.

Ein gattungsgemäßes Verfahren ist beispielsweise in US-6,522,774 beschrieben und beinhaltet folgende Verfahrensschritte: Zunächst wird in einem Übersichtsmodus mit einem Mikroskop ein aus einer Vielzahl von Einzelbildern zusammengesetztes Übersichtsbild der Probe aufgenommen und anschließend erfolgt ein Übergang in einen Detailmodus, in welchen mit dem Mikroskop Detailbilder von interessierenden Bereichen der Probe aufgenommen werden.

Eine aus US-6,522,774 bekannte Vorrichtung weist folgende Komponenten auf: Ein Mikroskop, mindestens eine an das Mikroskop angeschlossene Kamera zum Aufnehmen von mikroskopischen Bildern und eine Steuer- und Auswerteeinheit zum Ansteuern des Mikroskops und der mindestens einen Kamera, wobei die Steuer- und Auswerteeinheit in einem Übersichtsmodus zum Aufnehmen eines aus einer Vielzahl von Einzelbildern zusammengesetzten Übersichtsbilds der Probe und in einem Detailmodus zum Aufnehmen von Detailbildern von interessierenden Bereichen der Probe betreibbar ist.

In US-6,522,774 wird ein Übersichtsbild eines mikroskopischen Präparats, welches nicht vollständig in das Sehfeld der Kamera und des Mikroskops passt, aufgenommen. Das Übersichtsbild wird deshalb aus einer Vielzahl von Einzelbildern, die auch als Kacheln bezeichnet werden, zusammengesetzt. Diese Kachelbilder werden nacheinander durch Bewegung des Präparats mit dem Probentisch aufgenommen und mosaikartig zusammengesetzt. Um rasch ein Übersichtsbild mit einer vergleichsweise kleinen Vergrößerung zu erhalten, werden wenige Kachelbilder mit geringer Vergrößerung aufgenommen. Die interessierenden Bereiche können sodann anhand des Übersichtsbilds ausgewählt werden. Zum Untersuchen der ausgewählten Bereiche wird das Mikroskop durch Wechsel des Objektivs auf eine höhere Vergrößerung umgestellt und mit derselben Kamera und in demselben Strahlengang des Mikroskops werden nun die Detailbilder aufgenommen und gegebenenfalls zu detaillierteren Bildern zusammengesetzt.

US 2003/0016301 A1 betrifft ein Mikroskopsystem mit einer Vielzahl von Steuerungsmöglichkeiten. Insbesondere ist dabei auch die Möglichkeit eines "binning" für eine elektronische Kamera beschrieben.

Ein weiteres Verfahren und ein Mikroskop ist offenbart in US 2005/0190437 A1. Um Bereiche auszuschließen, wo sich keine Probenbilder befinden, wird vorgeschlagen, zunächst Kachelbilder mit einem ersten Objektiv mit kleiner Vergrößerung aufzunehmen und diese Kachelbilder in einem zweiten Schritt sodann in Teilbilder zu unterteilen, die dem Sichtfeld eines zweiten Objektivs mit größerer Vergrößerung entsprechen. In einem dritten Schritt wird dann geprüft, ob die Teilbilder Bildinformationen der Probe enthalten. Schließlich wird eine Aufnahme mit dem zweiten Objektiv und großer Vergrößerung nur bei den Teilbildern durchgeführt, wo eine Bildinformation vorhanden ist.

Um zu den letztendlich interessierenden Detailbildern zu gelangen, sind demnach zahlreiche Einzelschritte notwendig. Außerdem wird ein vergleichsweise hochwertiges Mikroskop benötigt, welches jedenfalls eine Mehrzahl von Objektiven unterschiedlicher Vergrößerung aufweist.

Aus WO 03/105675 A2 ist ein computergesteuertes Mikroskop bekannt, bei dem ein Probenbild zunächst mit einer ersten Auflösung aufgenommen wird. Sodann wird ein interessierender Bereich identifiziert, der mit einer höheren zweiten Auflösung aufgenommen wird. Diese Auflösung wird eingestellt, indem eine Linse des Mikroskops ausgetauscht wird oder eine Kamera mit höherer Pixeldichte verwendet wird.

**Aufgabe** der Erfindung ist es, ein Verfahren anzugeben, welches die Aufnahme der Detailbilder vereinfacht.

Diese Aufgabe wird durch das Verfahren mit den Merkmalen des Anspruchs 1 gelöst.

Vorteilhafte Varianten des erfindungsgemäßen Verfahrens sind Gegenstand der abhängigen Ansprüche.

Das Verfahren der oben genannten Art ist erfindungsgemäß dadurch weitergebildet, dass die Aufnahme des Übersichtsbilds im Übersichtsmodus mit einer im Vergleich zur

Aufnahme der Detailbilder reduzierten Auflösung der jeweils verwendeten Kamera erfolgt und dass das Übersichtsbild und die Detailbilder mit demselben Mikroskopobjektiv aufgenommen werden.

Bei einer Vorrichtung, mit welcher das erfindungsgemäße Verfahren durchgeführt werden kann, weist im Übersichtsmodus die eingesetzte Kamera im Vergleich zum Detailmodus eine geringere Auflösung auf und das Übersichtbild und die Detailbilder können mit demselben Mikroskopsobjektiv aufgenommen werden.

Bei den Vorarbeiten, die zur Erfindung führten, wurde zunächst erkannt, dass ein wesentlicher beschränkender Faktor beim Übergang vom Übersichtsmodus zum Detailmodus jeweils der Wechsel des Mikroskopobjektivs ist.

Weiterhin haben die Erfinder erkannt, dass für die Aufnahme des Übersichtsbilds grundsätzlich auch ein Mikroskopobjektiv mit großer Vergrößerung verwendet werden kann und dass außerdem die Auflösung der digitalen Kamera im Übersichtsmodus herabgesetzt werden kann.

Schließlich wurde erkannt, dass die für ein Übersichtsbild nötige Information auch mit einer reduzierten Kameraauflösung bereitgestellt werden kann.

Als Kemgedanke der Erfindung kann deshalb angesehen werden, das Übersichtsbild und die Detailbilder mit demselben Mikroskopobjektiv aufzunehmen und außerdem im Übersichtsmodus mit einer reduzierten Auflösung der digitalen Kamera zu arbeiten.

Hierdurch kann zum einen erheblich schneller vom Übersichtsmodus auf den Detailmodus umgeschaltet werden, da ein Wechsel des Mikroskopobjektivs nicht mehr nötig ist. Hierdurch wird die Aufnahme der Detailbilder insgesamt erheblich beschleunigt und vereinfacht.

Darüber hinaus ergeben sich aus der Vermeidung eines Objektivwechsels zahlreiche weitere Vorteile. So können die entsprechenden mechanischen Baugruppen grundsätzlich entfallen und deshalb erhebliche Kosten gespart werden. Ebenso entfällt die bewegte Mechanik als Störquelle. Schließlich entfallen bisherige Schwierigkeiten mit Bildversätzen ebenso wie das bei Objektivwechsetn nötige Nachfokussieren. Diese vorteilhaften Eigenschaften kommen in besonderer Weise beim Einsatz dieses Verfahrens beim "Slide Readern" zum Tragen, die dann mit einer feststehenden Optik ausgestattet werden können.

Weiterhin kann das erfindungsgemäße Verfahren prinzipiell auch mit einem Mikroskop, welches nur ein einziges Objektiv aufweist, durchgeführt werden. Ein besonderer Vorteil der Erfindung besteht deshalb darin, dass auch einfachere und kostengünstigere Mikroskope eingesetzt werden können. Beispielsweise erlaubt das erfindungsgemäße Verfahren die Entwicklung von kostengünstigen automatischen Aufnahmesystemen für mikroskopische Präparate.

Im Vergleich zum Stand der Technik, bei dem immer mit einem automatischen Objektivrevolver und mindestens zwei Objektiven gearbeitet werden muss, werden deshalb erhebliche Vereinfachungen erreicht.

Insgesamt ergeben sich durch die Erfindung erhebliche Vorteile im Hinblick auf Zuverlässigkeit, Geschwindigkeit, Kosten und Bedienerfreundlichkeit.

Wesentlich für die Erfindung ist deshalb, dass das Übersichtsbild, das auch als Orientierungsbild bezeichnet werden kann, und die Detailbilder, die auch als Analysebilder bezeichnet werden, mit demselben Objektiv aufgenommen werden. Bedingt durch den erfindungsgemäßen neuen Auslesemodus weisen die Bilder oder die Einzelkacheln oder Einzelbilder, aus denen die Gesamtbilder erzeugt werden, eine unterschiedlich große Auflösung auf.

Ganz allgemein wird in der vorliegenden Beschreibung unter dem Begriff Kamera sowohl die eigentliche eingesetzte Digitalkamera als auch ein Kamerasystem verstanden, welches aus eben dieser Digitalkamera und einem Kameraadapter besteht. Auf diesen Kameraadapter, der weitere optische Eigenschaften haben kann, wird weiter unten noch eingegangen.

Die Mikroskopbilder können grundsätzlich in zwei verschiedenen Modi aufgenommen werden. In einem Start/Stopp-Aufnahmemodus fährt der Mikroskoptisch an jede gewünschte Bildposition, hält dort an und die Kamera nimmt sodann über das Mikroskop ein Bild auf, bevor der Mikroskoptisch zur nächsten gewünschten Bildposition fährt.

Besonders bevorzugt ist jedoch ein sogenannter kontinuierlicher Aufnahmemodus. Der Mikroskoptisch fährt hierbei zeilen- oder spaltenweise oder in einer anderen definierten Bewegung über oder unter dem Präparat und die Mikroskopbilder werden, beispielsweise getriggert durch eine Positionsinformation des Tischs, während der Fahrt durch die Kamera über das Mikroskop aufgenommen. Dieser Modus ist viel schneller als der Start/Stopp-Modus. Gegebenenfalls muss während der kontinuierlichen Bewegung des Tischs die Fokussierung des Mikroskops automatisch nachgeführt werden.

Die Aufnahme insbesondere des Übersichtsbilds ist demnach schneller möglich, wenn der Probentisch des Mikroskops während der Bildaufnahme zumindest phasenweise kontinuierlich bewegt wird.

Bei einer zweckmäßigen Variante wird der Probentisch beispielsweise während der Bildaufnahme zumindest spaltenweise oder zeilenweise kontinuierlich bewegt.

Im kontinuierlichen Aufnahmemodus wird bevorzugt statt einer dauernden Beleuchtung ein Blitzlicht eingesetzt, welches durch die Kamera getriggert wird, um auf diese Weise durch die Bewegung des Probentischs verursachte Unschärfen zu vermeiden. Dies hat außerdem den Vorteil, dass die Kamera selbst keine sehr kurzen Öffnungszeiten bereitstellen muss und somit auch kostengünstige Kameras für die erfindungsgemäße Vorrichtung eingesetzt werden können. Vorteilhafterweise wird die Probe deshalb mit einer gepulsten Lichtquelle belichtet.

Für die Aufnahme des Übersichtsbilds ist kein Blitzlicht erforderlich, da die Bilder nicht hoch aufgelöst dargestellt werden müssen und deshalb eine eventuelle aus der Bewegung des Probentischs resultierende Unschärfe keine Rolle spielt.

Bei einer besonders bevorzugten Ausgestaltung des erfindungsgemäßen Verfahrens kann die Auflösung der Kamera für den Übersichtsmodus im Vergleich zum Detailmodus reduziert werden. Beispielsweise wird eine Kamera verwendet, welche in einem Binning-Modus betrieben werden kann. Kamera-Binning oder Pixel-Binning bedeutet, dass die Lichtintensitäten von mehreren Pixeln auf dem CCD-Sensor zu einem effektiv größeren Pixel aufsummiert werden. Dieses Verfahren bewirkt eine Reduzierung der Auflösung und eine Erhöhung der Lichtmenge pro Pixel. Das Ergebnisbild ist eine digitale Verkleinerung des Kamerabilds, ohne dass eine optische Verkleinerung hierfür notwendig ist.

Bei einer nicht erfindungsgemäßen Variante des Verfahrens werden deshalb das Übersichtsbild und die Detailbilder mit derselben Kamera aufgenommen, die Kamera wird zur Aufnahme des Übersichtsbilds in einem Binning-Modus betrieben und zur anschließenden Aufnahme der Detailbilder wird das Binning der Kamera heruntergesetzt. Die kürzere Auslesezeit des Kamerachips ermöglicht im Binning-Modus eine höhere Aufnahmegeschwindigkeit.

Diese Varianten zeichnen sich dadurch aus, dass an das verwendete Mikroskop keine großen Anforderungen gestellt werden, da nur eine einzige Kamera benötigt wird.

Bei einer einfachen Variante wird die Kamera zur Aufnahme des Übersichtsbilds im höchsten Binning-Modus betrieben und das Binning der Kamera wird für die Aufnahme der Detailbilder ausgeschaltet. Beispielsweise kann das Binning der Kamera für die Aufnahme des Übersichtsbilds 5x5 Sensorpixel betragen. Als Aufnahmemodus für das Übersichtsbild wird bevorzugt der kontinuierliche Modus gewählt. In Verbindung mit der durch das Binning deutlich reduzierten Datenmenge kann die Aufnahme der Einzelbilder äußerst schnell erfolgen. Die Zeit für die Aufnahme des Übersichtsbilds kann deshalb in derselben Größenordnung liegen, als ob man das Übersichtsbild mit einem Objektiv wesentlich geringerer Vergrößerung aufgenommen hätte. Beispielsweise wird in einem mit einem 40x-Objektiv und 5x5-Binning gewonnenen Übersichtsbild ein Pixel etwa so groß sein, als ob man es mit einem 8x-Objektiv aufgenommen hätte.

Grundsätzlich sind hierbei auch Zwischenstufen möglich. Beispielsweise kann es für bestimmte Anwendungen zweckmäßig und erwünscht sein, auch für die Detailbilder ein gewisses Binning beizubehalten, das heißt die Kamera nicht mit der höchsten Auflösung zu betreiben. Auch kann, wenn hinreichend Zeit und Kapazität für die Datenverarbeitung zur Verfügung steht, bereits ein Übersichtsbild mit einer größeren Informationsdichte, das heißt höherer Auflösung, aufgenommen werden, wobei hierfür die Kamera nicht im höchsten Binning-Modus betrieben wird.

Alternativ zu einer Reduzierung der Anzahl der Punkte bei konstantem Sehfeld der Kamera kann die Kameraauflösung bei unveränderter Punktzahl auch durch Vergrößerung des Sehfelds reduziert werden. Bei dem erfindungsgemäßen Verfahren wird demgemäß zur Reduzierung der Auflösung für den Übersichtsmodus im Vergleich zum Detailmodus ein Sehfeld der für den Übersichtsmodus verwendeten Kamera mit einer optischen Komponente vergrößert. Beispielsweise kann die Größe des Sehfelds der Kamera gezielt verändert werden, wenn der für die Aufnahme des Übersichtsbilds eingesetzten Kamera ein Zoom-Adapter zum Vergrößern des Sehfelds vorgeschaltet ist. Zusätzlich oder alternativ zu einem Zoom-Adapter als optischer Komponente zum Vergrößern des Sehfelds kann auch ein einfacher Kameraadapter, der eine Verkleinerungsstufe beinhaltet, eingesetzt werden.

Außerdem wird erfindungsgemäß zur Aufnahme des Übersichtsbilds eine erste Kamera und zur Aufnahme der Detailbilder eine zweite Kamera verwendet, wobei die erste Kamera im Vergleich zur zweiten Kamera das größere Sehfeld aufweist. Hierzu weist das Mikroskop einen separaten Kameraausgang auf, wobei eine Vergrößerung des Sehfelds durch einen der ersten Kamera vorgeschalteten verkleinernden Kameraadapter erreicht werden kann. Damit kann ohne Objektivwechsel das Sehfeld der Kamera vergrößert und die Aufnahme des Übersichtsbilds beschleunigt werden.

Zweckmäßig ist bei dieser Ausgestaltung weiterhin zum Umschalten zwischen der ersten Kamera und der zweiten Kamera ein von der Steuer- und Auswerteeinheit anzusteuernder schwenkbarer Spiegel vorhanden.

Grundsätzlich kann auch bei der Variante, bei welcher das Übersichtsbild und die Detailbilder mit demselben Mikroskopobjektiv aufgenommen werden, das Sehfeld der Kamera für die Aufnahme des Übersichtsbilds vergrößert werden. Hierzu kann beispielsweise der Kamera, die zur Aufnahme des Übersichtsbilds verwendet wird, ein, insbesondere mit einem Motor anzutreibender, Zoom-Adapter vorgeschaltet sein. Hierdurch kann ebenfalls das Sehfeld der Kamera vergrößert und die Aufnahme des Übersichtsbilds beschleunigt werden.

Die interessierenden Bereiche der Probe können anhand eines im ersten Verfahrensschritt gewonnenen Übersichtsbilds durch einen Benutzer interaktiv sowie alternativ oder ergänzend durch Bildanalyseverfahren ermittelt und ausgewählt werden.

Ausgehend von den so definierten Bereichen werden ohne Objektivwechsel Detailbilder in höherer Auflösung aufgenommen. Für diese detaillierte Aufnahme kann ebenso zwischen den beiden oben beschriebenen Aufnahmemodi, das heißt Start/Stopp-Modus oder kontinuierlicher Modus, gewählt werden. Das Binning der Kamera kann zweckmäßigerweise ausgeschaltet werden, um eine hohe Auflösung der Detailbilder zu erreichen.

Bei einer besonders bedienungsfreundlichen Variante des erfindungsgemäßen Verfahrens wird das gewonnene Übersichtsbild auf einem Computermonitor dargestellt und zur interaktiven Navigation auf der Probe zum Auswählen der interessierenden Bereiche verwendet. Eine solche interaktive Navigation auf dem Präparat kann auch während der detaillierten Aufnahme, also der Aufnahme mit höherer Vergrößerung, erfolgen.

Das erfindungsgemäße Verfahren wird an einem Mikroskopsystem implementiert, wobei als Steuer- und Auswerteeinheit ein Computer vorhanden ist. Das Aufnehmen und Zusammensetzen der Einzelbilder, die auch als Kacheln bezeichnet werden, im Übersichts- und im Detailmodus erfolgt deshalb in praktischen Fällen rechnergesteuert unter Einsatz eines Computerprogramms, welches zweckmäßigerweise als Computerprogrammprodukt auf einem Datenträger gespeichert sein kann.

Weitere Vorteile und Merkmale des erfindungsgemäßen Verfahrens werden nachstehend mit Bezug auf die schematischen Figuren erläutert.

Hierin zeigen:
- Fig. 1: eine schematische Ansicht einer Vorrichtung, mit welcher das erfindungsgemäße Verfahren durchgeführt werden kann; und
- Fig. 2: eine schematische Veranschaulichung einer Variante des erfindungsgemäßen Verfahrens.

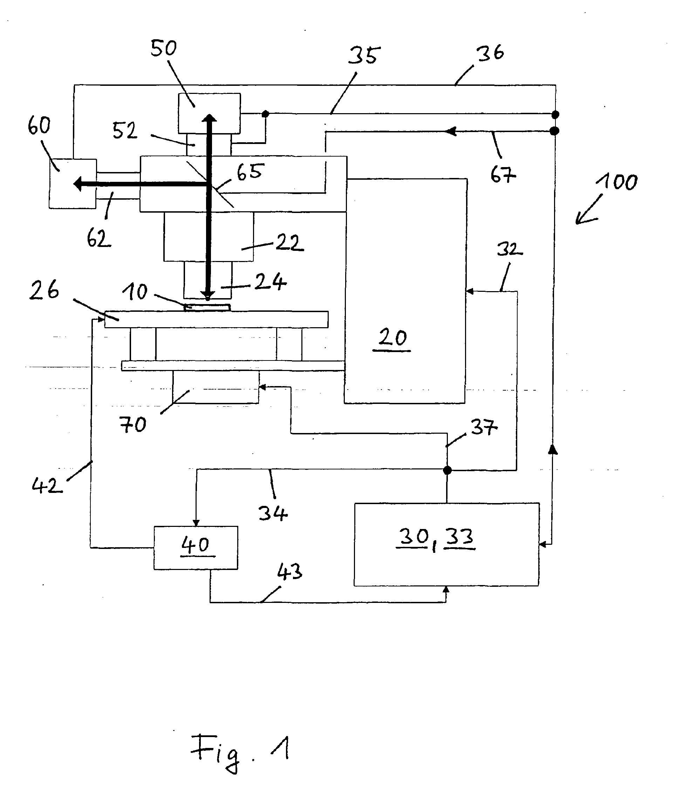

Die in Fig. 1 schematisch dargestellte Vorrichtung 100 weist als wesentliche Komponenten ein Mikroskop 20, eine erste Kamera 50 und eine zweite Kamera 60 sowie einen Computer 33 als Steuer- und Auswerteeinheit 30 zum Ansteuern und Auswerten von Informationen des Mikroskops 20, der ersten Kamera 50 und der zweiten Kamera 60. Erfindungsgemäß kann die Steuer- und Auswerteeinheit 30 in einem Übersichtsmodus zum Aufnehmen eines Übersichtsbilds 300 der Probe 10 und in einem Detailmodus zum Aufnehmen von Detailbildern 401, .., 412, 501, .., 504 von interessierenden Bereichen 400, 500 der Probe 10 betrieben werden. Das schematisch dargestellte Mikroskop 20 weist einen Tubus 22, ein daran angeordnetes Objektiv 24 sowie einen mit Motoren zu bewegenden Probentisch 26 auf. Ein auf dem Probentisch 26 als Probe 10 positioniertes mikroskopisches Präparat kann mit einer Beleuchtungseinrichtung 70, insbesondere gepulst, beleuchtet werden. In Fig. 1 ist eine Durchlichtanordnung gezeigt. Das erfindungsgemäße Konzept ist aber auch für beliebige andere Beleuchtungskonfigurationen und grundsätzlich auch für andere kontrastgebende Prinzipien einsetzbar.

Die erste Kamera 50 ist über einen Kameraadapter 52 mit dem Mikroskop 20 verbunden. Die zweite Kamera 60 ist über einen Kameraadapter 62 am Mikroskop 20 angeschlossen. Die Kameraadapter 52, 62 können neben der mechanischen Ankopplung der Kamera an dem Mikroskopaufbau auch eine optische Funktion erfüllen und sind deshalb Teil des Kamerasystems. Um eine gewünschte Verkleinerung des Sehfelds des Kamerasystems bereitzustellen, können die Kameraadapter 52, 62 eine verkleinernde Optik enthalten. Der Kameraadapter 52 kann gegebenenfalls auch ein Zoom-Adapter 52 sein. Typischerweise kann ein solcher Zoom-Adapter 52 eine variable Optik aufweisen, bei der eine Verkleinerung in einem Bereich von 0,3 bis 1 einstellbar ist. Zum Umschalten zwischen der ersten Kamera 50 und der zweiten Kamera 60 ist im Mikroskop 20 ein schwenkbarer Spiegel 65 vorhanden, der über eine Verbindungsleitung 67 von der Steuer- und Auswerteeinheit 30 angesteuert werden kann. Die erste Kamera 50 kann in unterschiedlichen Binning-Modi betrieben werden, welche von der Steuer- und Auswerteeinheit 30 über eine Verbindungsleitung 35 eingestellt werden können. Über dieselbe Verbindungsleitung 35 werden auch die übrigen Kamerafunktionalitäten gesteuert sowie die von der ersten Kamera 50 aufgenommenen Bilddaten an die Steuer- und Auswerteeinheit 30 zurückgeführt.

Entsprechend erfolgt die Steuerung der zweiten Kamera 60 beziehungsweise das Übertragen von Bilddaten der zweiten Kamera 60 an die Steuer- und Auswerteeinheit 30 über eine Verbindungsleitung 36.

Das Mikroskop 20 ist zur Steuerung und zum Auslesen, beispielsweise von Statusinformationen, mit der Steuer- und Auswerteeinheit 30 über eine Verbindungsleitung 32 verbunden. Zur Steuerung des Probentischs 26 ist eine Tischsteuerung 40 vorhanden, die dem Tisch 26 die notwendigen Steuersignale über eine Verbindungsleitung 42 übermittelt. Die Tischsteuerung 40 ihrerseits wird von der Steuer- und Auswerteeinheit 30 über eine Leitung 34 gesteuert und führt über eine weitere Leitung 43 Statusinformationen, insbesondere eine Positionsinformation, an die Steuer- und Auswerteeinheit 30 zurück.

Auch die Aktivität der Beleuchtungseinrichtung 70 schließlich kann über eine Verbindungsleitung 37 von der Steuer- und Auswerteeinheit 30 gesteuert werden. Insbesondele kann auf diese Weise ein Pulsbetrieb oder ein kontinuierlicher Betrieb durch die Steuer- und Auswerteeinheit 30 festgelegt werden.

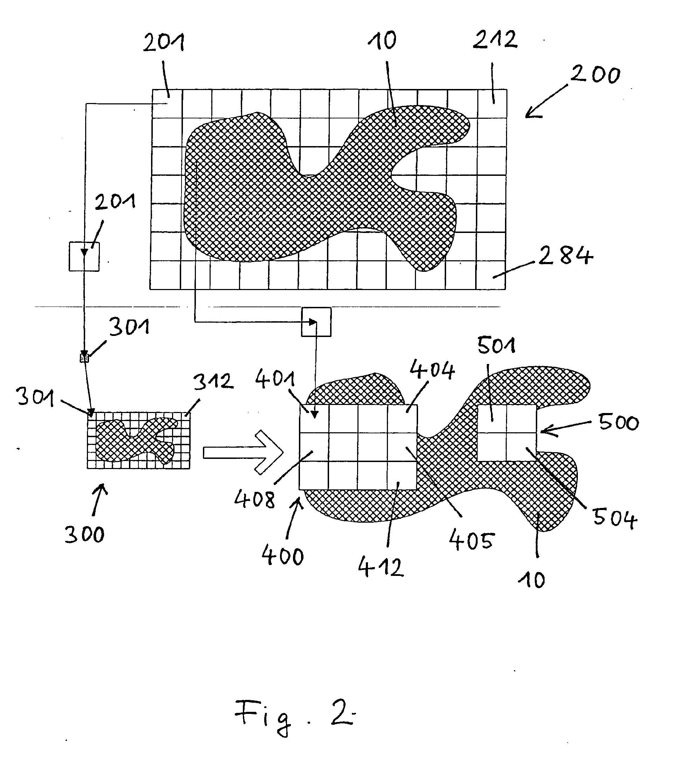

Eine Variante des erfindungsgemäßen Verfahrens und entsprechend des erfindungsgemäßen Computerprogramms wird nachstehend mit Bezug auf die Figuren 1 und 2 beschrieben.

In einem ersten Schritt wird zunächst ein mikroskopisches Präparat als Probe 10 auf dem Probentisch 26 positioniert. Das Mikroskop 20 weist im gezeigten Beispiel lediglich ein einziges Objektiv, beispielsweise 40x auf. Sodann schaltet der Computer 33 die erste Kamera 50 auf Binning 5x5. Im folgenden Verfahrensschritt berechnet der Computer 33 die Positionen des Probentischs für alle Einzel- oder Kachelbilder 201, .., 212, .., 284 eines Gesamtbilds der Probe 10. Der Computer 33 positioniert den Probentisch 26 über die Tischsteuerung 40 sodann an die linke obere Ecke der Probe 10, also an die linke obere Ecke des Einzelbilds 201. Aufgrund des in der ersten Kamera 50 eingestellten Binnings wird aber tatsächlich nicht das Bild 201 sondern das Bild 301 aufgenommen, welches eine um einen Fäktor 5x5=25 geringere Pixelanzahl aufweist. Das tatsächlich aufgenommene Übersichtsbild 300 ist also um einen Faktor 25 kleiner als das Gesamtbild 200. Dies ist in Fig. 2 schematisch durch eine entsprechend kleinere Darstellung angedeutet.

Der Computer 33 fährt den Probentisch 26 dann parallel zur x-Achse nach rechts bis zum Ende der Zeile. Während der Fahrt des Probentischs 26 wird jeweils ein Positionssignal von der Tischsteuerung 40 an den Computer 33 zurückgeführt. Bei vorgegebenen Positionssignalen, also vorgegebenen Kachelpositionen, wird jeweils ein Bild mit kurzer Belichtungszeit der ersten Kamera 50 aufgenommen. Eine gepulste Beleuchtung ist hierbei nicht erforderlich, da das Übersichtsbild 300 ohnehin mit vergleichsweise nur geringer Auflösung aufgenommen wird. Wenn das Ende einer Zeile erreicht ist, fährt der Probentisch 26 eine Kachelbildzeile nach unten und fährt wie vorhergehend, jedoch in umgekehrter Richtung der x-Achse zurück und nimmt dabei die nächste Kachelbildzeile, also die Einzelbilder 313 bis 324, auf. Dieser Vorgang wird wiederholt, bis das komplette Übersichtsbild 300 mit allen Einzelbildern 301 bis 384 aufgenommen ist. Das auf diese Weise gewonnene Übersichtsbild 300 wird zur interaktiven Auswahl von interessierenden Bereichen oder Regionen durch einen Benutzer verwendet. Anschließend schaltet der Computer 33 die erste Kamera 50 auf kein Binning um.

Neben diesem Bewegungsmodus durch die einzelnen Kachelbildzeilen, bei denen sich die Bewegungsrichtung nach jeder Zeile ändert, können die Bilder auch in einem so genannten Kamm-Modus aufgenommen werden. Hierbei fährt der Probentisch nach Durchlauf jeder Kachelbildzeile an den Zeilenanfang zurück und durchläuft dann die jeweils folgende Kachelbildzeile. Der Kamm-Modus kann bevorzugt sein, wenn eine besonders hohe Genauigkeit der Positionierung erforderlich ist.

Bei einer alternativen Ausgestaltung der Vorrichtung ist der Kameraadapter 52 ein Zoom-Adapter 52. Statt der Verwendung der verschiedenen Binning-Modi für die erste Kamera 50 kann dann auch mit Hilfe des Zoom-Adapters 52 ein größeres Sehfeld eingestellt werden, was ebenso einer reduzierten Punktzahl pro Fläche des Sehfelds, also einer reduzierten Auflösung entspricht. Grundsätzlich kann auch eine Vergrößerung des Sehfelds durch eine Kombination der Wirkung eines Zoom-Adapters mit einem gewissen Binning erzielt werden.

Beispielsweise können die Bereiche 400, 500 als interessierende Bereiche identifiziert werden. Der Computer 33 berechnet sodann die Positionen des Probentischs 26 für alle Einzelbilder 301 bis 384 des Detailbilds. Nach Auswahl, beispielsweise des interessierenden Bereichs 400, steuert der Computer 33 den Probentisch 26 an die linke obere Ecke des ausgewählten Bereichs 400, also an die linke obere Ecke des Einzelbilds 401 des Bereichs 400. Sodann steuert der Computer 33 den Probentisch 26 parallel zur x-Achse nach rechts bis zum Ende des Bereichs 400, also bis zum rechten Rand des Einzelbilds 404 des Bereichs 400. Während dieser Bewegung des Probentischs 26 wird dem Computer 33 von der Tischsteuerung 40 kontinuierlich ein Positionssignal des Probentischs 26 zugeführt. Bei jeder vorgegebenen Kachelposition wird ein Bild mit kurzer Belichtungszeit aufgenommen. Besonders zweckmäßig wird hierfür außerdem die Beleuchtungseinheit 70 gepulst betrieben, um Unschärfen der Bilder aufgrund der Probenbewegung zu vermeiden. Nach Durchgang durch die erste Zeile sind die Bilder 401 bis 404 aufgenommen. Sodann wird der Probentisch 26 eine Kachelbildzeile nach unten verfahren und es werden im Anschluss die Kachelbilder 405 bis 408 aufgenommen. Dieser Vorgang wird wiederholt, bis für den interessierenden Bereich 400 alle Einzelbilder 401 bis 412 aufgenommen sind. Entsprechend erfolgt die Aufnahme der Detailbilder für den weiteren ausgewählten interessierenden Bereich 500 mit dessen Einzelbildern 501 bis 504. Auch hier können, wie bereits vorstehend beschrieben, die aufeinander folgenden Zeilen in jeweils abwechselnder Richtung durchlaufen werden. Wenn besonders hohe Anforderungen an die Positioniergenauigkeit gestellt werden, ist aber ebenso der Kamm-Modus möglich, bei dem jeweils an den Zeilenanfang zurückgefahren wird und alle Zeilen in derselben Richtung durchlaufen werden.

Erfindungsgemäß wird zur Aufnahme der Detailbilder auch die zweite Kamera 60 verwendet, wobei zum Umschalten zwischen der ersten Kamera 50 und der zweiten Kamera 60 der schwenkbare Spiegel 64 über die Steuer- und Auswerteeinheit 30 betätigt wird.

Mit der vorliegenden Erfindung wird ein neuartiges Verfahren zum mikroskopischen Untersuchen einer Probe bereitgestellt, mit welchem die mikroskopische Untersuchung von Proben, bei denen ausgehend von einem Übersichtsbild Detailbilder generiert werden sollen, schneller durchgeführt werden kann. Dies kann im Vergleich zum Stand der Technik mit einem reduzierten apparativen Aufwand bewerkstelligt werden.

## Patentansprüche

1. Verfahren zum mikroskopischen Untersuchen einer Probe (10),
bei dem in einem Übersichtsmodus mit einem Mikroskop (20) zunächst ein aus einer Vielzahl von Einzelbildern (301,302,..) zusammengesetztes Übersichtsbild (300) der Probe (10) aufgenommen wird, wobei die Einzelbilder (301,302,..) an unterschiedlichen Positionen der Probe (10) aufgenommen werden, und bei dem anschließend ein Übergang in einen Detailmodus erfolgt, in welchem mit dem Mikroskop (20) Detailbilder (401,..,412,501,..,504) von interessierenden Bereichen (400,500) der Probe (10) aufgenommen werden,
bei dem die Aufnahme des Übersichtsbilds (300) im Übersichtsmodus mit einer im Vergleich zur Aufnahme der Detailbilder (401,..,412,501,..,504) geringeren Auflösung der jeweils verwendeten Kamera (50,60) erfolgt und
bei dem das Übersichtsbild (300) und die Detailbilder (401,..,412,501,..,504) mit demselben Mikroskopobjektiv (24) aufgenommen werden,
**dadurch gekennzeichnet,**
**dass** im Übersichtsmodus im Vergleich zum Detailmodus ein Sehfeld der verwendeten Kamera (50) zur Verringerung der Kameraauflösung mit einer optischen Komponente vergrößert wird und
**dass** zur Aufnahme des Übersichtsbilds (300) eine erste Kamera (50) und zur Aufnahme der Detailbilder (401,..,412,501,..,504) eine zweite Kamera (60) verwendet wird, wobei die erste Kamera (50) im Vergleich zur zweiten Kamera (60) das größere Sehfeld aufweist.

2. Verfahren nach Anspruch 1,
**dadurch gekennzeichnet,**
**dass** das Sehfeld der für den Übersichtsmodus verwendeten Kamera (50) mit einem Zoom-Adapter (52) und/oder mit einem Kameraadapter (52, 62) vergrößert wird.

3. Verfahren nach Anspruch 1 oder 2,
**dadurch gekennzeichnet,**
**dass** das größere Sehfeld durch einen der ersten Kamera (50) vorgeschalteten, verkleinernden Kamera-Adapter bereitgestellt wird.

4. Verfahren nach einem der Ansprüche 1 bis 3,
**dadurch gekennzeichnet,**
**dass** ein Probentisch (26) des Mikroskops (20) während der Bildaufnahme zumindest phasenweise kontinuierlich bewegt wird.

5. Verfahren nach Anspruch 4,
**dadurch gekennzeichnet,**
**dass** der Probentisch (26) während der Bildaufnahme zumindest spaltenweise oder zeilenweise kontinuierlich bewegt wird.

6. Verfahren nach einem der Ansprüche 1 bis 5,
**dadurch gekennzeichnet,**
**dass** die Probe (10) mit einer gepulsten Lichtquelle (70) beleuchtet wird.

7. Verfahren nach Anspruch 6,
**dadurch gekennzeichnet,**
**dass** das Übersichtsbild (300) zur interaktiven Navigation auf der Probe (10) zum Auswählen der interessierenden Bereiche (400,500) verwendet wird.

## Claims

1. Method for microscopically examining a sample (10),
wherein, in an overview mode, first an overview image (300) of the sample (10) composed of a large number of individual images (301, 302,...) is recorded with a microscope (20), wherein the individual images (301, 302,...) are recorded at different positions of the sample (10), and
followed by a transition to a detail mode, in which detail images (401,.., 412, 501,.., 504) of regions of interest (400, 500) of the sample (10) are recorded with said microscope (20),
wherein the recording of the overview image (300) in said overview mode is carried out at a lower resolution of the respectively used camera (50, 60) than that employed for the recording of the detail images (401,.., 412, 501,.., 504) and wherein the overview image (300) and the detail images (401,.., 412, 501,.., 504) are recorded using the same microscope objective (24), **characterized in that**
in the overview mode, as compared with the detail mode, a field of view of the camera (50) is enlarged by means of an optical component for effecting a reduction of the camera resolution for the overview mode, and
that a first camera (50) is used for the recording of said overview image (300) and a second camera (60) is used for the recording of the detail images (401,.., 412, 501,.., 504), wherein the first camera (50) has a larger field of view than the second camera (60).

2. Method according to claim 1,
**characterized in that**
the field of view of the camera (50) used for the overview mode is enlarged by means of a zoom adapter (52) and/or a camera adapter (52, 62).

3. Method according to claim 1 or 2,
**characterized in that**
the larger field of view is attained by a size-reducing camera adapter placed in front of the first camera (50).

4. Method according to one of claims 1 to 3,
**characterized in that**
a sample stage (26) of the microscope (20) is moved continuously at least during phases during the imaging recording.

5. Method according to claim 4,
**characterized in that**
the sample stage (26) is continuously moved at least column-by-column or line-by-line during the imaging recording.

6. Method according to one of claims 1 to 5,
**characterized in that**
the sample (10) is illuminated by a pulsed light source (70).

7. Method according to claim 6,
**characterized in that**
the overview image (300) is used for interactive navigation across the sample (10) for the purpose of selecting the regions of interest (400, 500).

## Revendications

1. Procédé d'analyse microscopique d'un échantillon (10),
selon lequel, d'abord, une image globale (300) de l'échantillon (10) composée d'une pluralité d'images individuelles (301, 302, ....) est capturée dans un mode global avec un microscope (20), les images individuelles (301, 302, ....) étant capturées dans des positions différentes de l'échantillon (10), et selon lequel, ensuite, une transition a lieu vers un mode détaillé, dans lequel des images détaillées (401, ..., 412, 501, ..., 504) de régions intéressantes (400, 500) de l'échantillon (10) sont capturées avec le microscope (20), selon lequel la capture de l'image globale (300) dans le mode global a lieu avec une résolution de la caméra (50, 60) utilisée à chaque fois qui est plus faible par comparaison avec la capture des images détaillées (401, ..., 412, 501, ..., 504), et
selon lequel l'image globale (300) et les images détaillées (401, ..., 412, 501, ..., 504) sont capturées avec le même objectif (24) du microscope, **caractérisé :**
**en ce que**, dans le mode global par comparaison avec le mode détaillé, un champ visuel de la caméra (50) utilisée est agrandi avec un composant optique pour la réduction de la résolution de la caméra, et
**en ce qu'**une première caméra (50) est utilisée pour la capture de l'image globale (300) et une deuxième caméra (60) pour la capture des images détaillées (401, ..., 412, 501, ..., 504), la première caméra (50) comprenant le plus grand champ visuel en comparaison de celui de la deuxième caméra (60).

2. Procédé selon la revendication 1,
**caractérisé :**
**en ce que** le champ visuel de la caméra (50) utilisée pour le mode global est agrandi avec un dispositif d'adaptation à focale variable (52) et/ou avec un dispositif d'adaptation pour caméra (52, 62).

3. Procédé selon la revendication 1 ou 2,
**caractérisé :**
**en ce que** le plus grand champ visuel est fourni au moyen d'un dispositif d'adaptation réducteur pour caméra, placé devant la première caméra (50).

4. Procédé selon une des revendications 1 à 3,
**caractérisé :**
**en ce que**, pendant la capture d'image, une platine d'échantillon (26) du microscope (20) est déplacée de manière continue, au moins graduellement.

5. Procédé selon la revendication 4,
**caractérisé :**
**en ce que**, pendant la capture d'image, la platine d'échantillon (26) est déplacée de manière continue, au moins par colonne ou par ligne.

6. Procédé selon une des revendications 1 à 5,
**caractérisé :**
**en ce que** l'échantillon (10) est éclairé avec une source de lumière à impulsions (70).

7. Procédé selon la revendication 6,
**caractérisé :**
**en ce que** l'image globale (300) est utilisée pour la navigation interactive sur l'échantillon (10), afin de choisir les régions intéressantes (400, 500).
